# EUROPÄISCHE PATENTSCHRIFT

(11) **EP 2 527 676 B1**
(45) Veröffentlichungstag und Bekanntmachung des Hinweises auf die Patenterteilung: **29.05.2013**
(21) Anmeldenummer: 11006375.7
(22) Anmeldetag: 03.08.2011
(51) Int. Cl.: F16C 33/58, F16C 35/06, F16B 31/04

(54) **Verfahren zum Erzeugen einer mechanischen Spannung und Vorrichtung zum mechanischen Verspannen mindestens einer Verschraubung**
Method for generating a mechanical tension and device for mechanical tensioning of at least one screw
Procédé de production d'un serrage mécanique et dispositif de serrage mécanique d'au moins un boulonnage

(43) Veröffentlichungstag der Anmeldung: 28.11.2012
(73) Patentinhaber: IMO Holding GmbH, 91350 Gremsdorf (DE)
(72) Erfinder: Hubertus, Frank, 91315 Höchstadt (DE)

(56) Entgegenhaltungen:
- DE-A1-102008 050 620
- DE-C2- 3 510 926
- JP-A- 60 060 321
- US-A- 5 075 950
- US-A- 5 540 529

## Beschreibung

Die Erfindung bezieht sich auf ein System beziehungsweise eine Vorrichtung und ein Verfahren zum Verspannen von Schrauben entsprechend dem Oberbegriff der unabhängigen Ansprüche. Weitere Merkmale und Ausgestaltungen sind in den jeweils abhängigen Patentansprüchen beschrieben.

Das genaue Verspannen von größeren und großen Schrauben ist aufwendig und bedarf zum Teil eines großen mechanischen Aufwands. Andererseits ist eine hohe und möglichst genau eingestellte Schraubenvorspannkraft die Voraussetzung zur sicheren Übertragung von Belastungen verschraubter Bauteile. Bei großen Drehverbindungen kann mit einer genauen Anziehmethode der Schrauben die erforderliche Schraubenanzahl reduziert bzw. eine höhere Sicherheit erreicht werden. Die Schraubenverspannung erreicht man mit genau anzeigenden Drehmomentschlüsseln, mit hydraulischen Spannvorrichtungen, mit der Längenmessung der Schrauben (mechanisch oder mit Ultraschall) oder speziell präparierten Schrauben, z.B. "Rotabolt"- oder "Superbolt"-Schrauben. So zeigt beispielsweise sowohl der SUPERBOLT® - Produktkatalog 2009 derartige Schraubensysteme, als auch beispielhaft die in den zugehörigen Patenten WO 99/64201 beziehungsweise EP 1117504 B1 beschriebene Lösung, ein Spannsystem beinhaltend mehrere Verspannschrauben.

Dabei sind an einem Körper eine Vielzahl von Bohrungen in gleichmäßigem Abstand von einer Längsmittelachse angebracht. Die gattungs bildende Definition ist ein "Spanner mit mehreren Verspannschrauben", umfassend einen länglichen Befestiger mit einem Spannungserzeuger, im Wesentlichen eine Schraube, zumeist eine massive Schraube, und einem Verbindungsglied an gegenüberliegenden Enden eines Schaft-Teils und ebenso umfassend Verspannschrauben, welche einen Gewindeschaft aufweisen zwischen momentaufnehmenden Enden und gegenüberliegenden Druckspannungsenden. Die Verspannschrauben sind angebracht in Gewindeöffnungen, welche um einen äußeren Umfangsteil des Spannungserzeugers beabstandet sind. Sie dienen der Erzeugung einer Klemmkraft zwischen zwei verschraubten Teilen. Das Prinzip ist je auf jede Schraube einzeln anwendbar. Die Schrauben werden von der entgegenliegenden Seite verspannt von der Sie in das Bauteil eingeschraubt werden. Es ist nach diesem Stand der Technik nicht möglich, die Schraube jeweils von der gleichen Richtung zu verspannten von der sie eingebracht wird.

Ein weiteres Verfahren um Schrauben technisch akkurat zu Verspannen ist es, den Reibfaktor mit Hilfe von speziellen Schmiermitteln in einem möglichst engen Toleranzbereich zu halten. Speziell bei großen Schraubendurchmessern (über M30) treten aber durch die kleineren Serien, die typischerweise gefertigt werden, größere Streuungen bei den Reibfaktoren auf oder aber es müssten für jedes Fertigungslos separate Messungen durchgeführt werden. Dies ist in der Regel aufwendig und somit nachteilig.

Man kann mit Hilfe von speziellen Muttern oder Schrauben auch große Schrauben mit gewisser Genauigkeit vorspannen, bzw. die Vorspannung nach dem Einbau dann einfach kontrollieren. Sämtliche bisher genannten Vorgehensweisen zum Verspannen von größeren und großen Schrauben haben Nachteile. Zum Teil ist ein erheblicher mechanischer Aufwand (hydraulische Spannvorrichtung) nötig, oder aber zum anderen Teil sind speziell präparierte Schrauben nötig, beispielsweise oben genannte "Superbolt"-Schrauben, oder aber ist ein hoher Messaufwand erforderlich. Trotz dieser Maßnahmen verbleiben dennoch Streuwerte bis αA = 1,4 möglich. Will man die Streuung der Schraubenvorspannung weiter einengen, so sind aufwendige Verfahren wie ein hydraulisches Vorspannen oder spezielle Muttern oder Schrauben notwendig. Dies ist aufwändig und kostet in der Praxis Zeit und Geld. Werden Schrauben hydraulisch vorgespannt, so muss die Überprüfung der Vorspannung auch mit einer hydraulischen Spannvorrichtung erfolgen. Eine Kontrolle über einen Drehmomentschlüssel ist nicht zulässig. Dies ist daher ebenfalls nachteilig.

Werden spezielle Schrauben oder Muttern verwendet, kann je nach Bauart auch ein Drehmomentschlüssel zur Kontrolle verwendet werden. Wurde die Vorspannung über ein Ultraschall-Verfahren eingestellt, ist bei der Kontrolle auch dieses Verfahren zu nutzen. Beim Kontrollieren der Vorspannung muss jedoch bekannt sein, mit welchem Verfahren vorgespannt wurde. Dies ist ebenfalls nachteilig.

Diese Nachteile betrachtend gilt es ein System beziehungsweise eine Vorrichtung zu gestalten, welche es ermöglicht mit handelsüblichen Schrauben und Schraubenbolzen, sowie mit einfachen Mitteln und ohne zusätzlichen Vorrichtungen zu benötigen, eine möglichst genaue Vorspannung in den Befestigungsschrauben zu erzeugen. Ein Hauptziel der Erfindung ist es, in Drehverbindungen, beispielsweise in Wälzlagern geringen bis großen Durchmessers, also auch in sogenannten Großwälzlagern, eingesetzt werden zu können.

Die Lösung gelingt, wenn eine Vorrichtung gemäß vorliegender Erfindung eingesetzt wird. Merkmale und Ausprägungen sind in der Beschreibung und in den Patentansprüchen beschrieben. Beispielhafte Ausprägungen sind den nachfolgenden Zeichnungen zu entnehmen.

Gemäß der Lehre der Erfindung wird direkt in die Drehverbindung eine Eindrehung beziehungsweise ein Einstich eingebracht, mit deren Hilfe eine Art integrierte "Ringmutter", auch "Mutterring" genannt, entsteht. Dieser Einstich macht den Ringmutterbereich so elastisch und nachgiebig, dass dieser Bereich praktisch von der Drehverbindung entkoppelt ist, aber nicht verloren werden kann, denn diese Ringmutter ist nicht getrennt von dem Drehkörper (mit "Drehkörper" ist gemeint der Innenring oder Außenring einer Drehverbindung, also einer der gegeneinander verdrehbaren Komponenten der Drehverbindung) sondern ein Teil dessen. Über einen beispielsweise während dem Produktionsschritt des Einstichdrehens verbleibender Materialbestand in dem Einstichspalt (später genannt "Vorspannspait") verbleibt ein Materialsteg, der die integrierte "Ringmutter beziehungsweise "Mutterring" mit dem eigentlichen Drehkörper stets und permanent weiterhin verbindet. Mit Hilfe von idealerweise drei bis idealerweise sieben bis neun (bei großen Schraubendurchmessern auch mehr) verhältnismäßig kleinen Gewindebohrungen um jedes Befestigungsgewinde, beispielsweise also ein kleines Gewinde mit Durchmesser 16 (metrische M16) um ein großes Gewinde mit beispielsweise Durchmesser 42 (metrisch M42) Befestigungsgewinde, wird die Befestigungsschraube torsionsfrei vorgespannt. Die Befestigungsschraube kann damit bis auf beispielsweise 90% der Fließgrenze vorgespannt werden und die Streuung der Vorspannung der Befestigungsschraube kann bei der Verwendung von einem definierten Reibfaktor in den Hilfsgewindebohrungen bzw. Vorspannschrauben bis auf einen Streufaktor von αA = 1,2 reduziert werden. Dies ist in der Praxis von immensem Vorteil.

Ebenfalls ist es nach der Lehre der Erfindung möglich, eine spätere Kontrolle der Vorspannung der Befestigungsschrauben zu erreichen. Derartige Kontrollen sind nämlich von vielen Drehverbindungsherstellern vorgeschrieben. Mit einem kleinen Drehmomentschlüssel kann der Anwender dann mittels den in den verhältnismäßig kleinen Gewindebohrungen eingebrachten Hilfsschrauben, später auch "Vorspannschrauben" genannt, die Schraubenvorspannung prüfen bzw. bei Bedarf nachstellen/ nachziehen. Eine hydraulische Spannvorrichtung oder ein großer, mit langem Hebel versehener Drehmomentschlüssel, ist damit nicht notwendig. Dies spart in der Praxis Aufwand, somit auch Kosten. In vielen Anwendungen sind die Bauraumverhältnisse auch so, dass nicht mit großem Drehmomentschlüssel gearbeitet werden kann. Speziell hier treten die Vorteile der Erfindung deutlich zutage.

Der oben genannte Einstich zum Freischneiden des Gewindebereichs in der Drehverbindung kann sowohl radial von außerhalb der Drehverbindung als auch von der gegenüberliegenden Seite, also von innen der Laufbahnseite erfolgen. Die Folge des Einstichs zum Freischneiden des Gewindebereiches und der folgenden "Trennung" zwischen Mutterring/ Ringmutter und dem "Vollkörper" der Drehverbindung ist ein resultierender Spalt, nachfolgend "Vorspannspatt" genannt. Der Mutterring / Ringmutter ist dennoch ein integraler Bestandteil der Drehverbindung, da stets eine verbleibender und verbindender Materialsteg vorhanden ist, sodass der Mutterring/ Ringmutter nicht verloren werden kann.

Der Einstich kann, wenn er von außen eingebracht ist, durch eine einfache umlaufende, beispielsweise eine bandförmige, Dichtung abgedichtet werden. Diese Dichtung wird in der Regel herkömmlich durch Eindrücken in eigens dafür vorgesehene Nuten/ Fixiernuten in Position gehalten.

Da bereits bei großen Drehverbindungen ein hochfester Werkstoff verwendet werden kann, erübrigt sich in der Regel die Verwendung von gehärteten oder hochvergüteten Stützscheiben wie sie von den handelsüblichen Sondermuttern bekannt sind.

Es ließe sich im Übrigen in einer Weiterführung des Erfindungsgedankens auch die Gewinde in einem zusätzlichen Ring einarbeiten der als beigelegtes Teil mit der Drehverbindung angeliefert wird. (Dann wäre der Mutterring / Ringmutter per Definition jedoch kein integraler Bestandteil der Drehverbindung).

Wird in der Mutterring/ Ringmutter auf den Lochkreis der Befestigungsgewinde eine kleine Durchgangsbohrung angebracht, so lässt sich an anderer Stelle mit Hilfe einer Messuhr auch die Vorspannung der Schrauben, bzw. deren Vorspannweg ermitteln. In diesem Fall hat auch die Reibungszahl im Gewinde der Hilfsschrauben keinen Einfluss auf die Vorspannung der Befestigungsschraube. Es muss lediglich ein Vorspannweg, der durch die vorgegebenen Klemmlängenverhältnisse ermittelt werden kann, eingestellt werden. Damit kann auf eine genauere Einstellung der Reibungszahl unter dem Schraubenkopf und dem Gewinde der Hilfsschrauben verzichtet werden. Um ein möglichst gleichmäßiges Ergebnis zu erreichen, sollten trotzdem alle Hilfsschrauben einer Befestigungsbohrung mit einem näherungsweise gleichem Drehmoment angezogen werden.

Es ergibt sich ein noch folgender weiterer Vorteil. Mit dieser Art der erfindungsgemäßen Schraubenvorspannung unter Verwendung verhältnismäßig kleiner Gewindebohrungen um jedes Befestigungsgewinde ist insgesamt eine deutlich höhere verwendete Schraubenanzahl möglich, denn es ist hier weder der Platzbedarf für eine hydraulische Spannvorrichtung noch eine entsprechende Nuss für einen Drehmomentschlüssel notwendig. Es könnten damit die Befestigungsschrauben so eng angeordnet werden, dass praktisch Schraubenkopf an Schraubenkopf angeordnet werden kann. Dieses Prinzip spart in der Praxis mitunter sehr viel Platz.
Nach Maßgabe der Erfindung zeigt die Schnittdarstellung einer Drehverbindung, welche diese Erfindung beinhaltet, einen Innenring und/ oder einen Außenring, jeweils beinhaltend mindestens eine Befestigungsschraube. Diese Befestigungsschraube befestigt jeweils die Drehverbindungskomponente mit der zugehörigen Anschlusskonstruktion. Diese Befestigungsschraube wird ein eine Schraubenbohrung eingeführt, welche mindestens durch den Mutterring, als auch durch die zu befestigende Drehverbindungskomponente, als auch durch die zu befestigende Anschlusskonstruktion durchgeht. Um diese Befestigungsschraube jeweils angeordnet sind mindestens eine oder mehrere Vorspannschrauben. Die Bohrungsdurchmesser zu diesen Vorspannschrauben weisen in der Regel einen wesentlich geringeren Durchmesser auf als die Bohrungsdurchmesser der Bohrungen für die Befestigungsschrauben. Demnach weisen auch die Vorspannschrauben in der Regel einen wesentlich geringeren Durchmesser auf als die Befestigungsschrauben. Dies Vorspannschrauben sind jeweils in die Gewindebohrungen des jeweiligen integrierten Mutterrings eingeschraubt. Diese Gewindebohrungen sind bezüglich des Mutterrings als durchgängige Bohrungen ausgeführt ― in die zu diesem jeweiligen Mutterring zugehörige Drehverbindungskomponente dringen die Bohrungen für die Vorspannschrauben jedoch nie ein. Die Vorspannschrauben sind also jeweils in die zugehörigen Gewindebohrungen eingeschraubt und zwar so weit, dass Sie an der dem Vorspannspalt zwischen Mutterring und Drehverbindungskomponente gegenüberliegenden Fläche der jeweils zu diesem Mutterring zugehörigen Drehverbindungskomponente mechanisch kontaktieren, mit dem Ziel, diese Drehverbindungskomponente gegenüber dem zugehörigen Mutterring zu beabstanden. Dabei werden die jeweiligen Befestigungsschrauben gegenüber der jeweiligen Drehverbindungskomponente vorgespannt.

Die Drehverbindungskomponenten an sich sind gegeneinander wie hinreichend bekannt verdrehbar gelagert durch im Allgemeinen mindestens eine Reihe von Wälzkörpern in entsprechenden Laufbahnen.

Ein jeweiliger Vorspannspalt, der für die Erfindung funktional maßgeblich ist, wird in seiner Spaltbreite maßgeblich durch die vorgefertigte Breite während des Einstichdrehens definiert. Im Betrieb jedoch kann sich dieser Vorspannspalt vergrößern oder verringern, je nachdem wie hoch der Betrag der Vorspannung der Vorspannschrauben ist, um den Mutterring von dem Drehkörper zu beabstanden.

Die Vorspannschrauben an sich kontaktieren dabei stets den jeweiligen Drehkörper jeweils an der dem Vorspannspalt gegenüberliegenden Körperfläche der Drehkomponente.

Insbesondere ergibt sich dann eine besonders hohe Vorspannwirkung, wenn der Federweg der Verspannung maximal ist. Dies kann realisiert werden dadurch, dass nicht nur ein scheibenförmiger integrierter Mutterring verwendet wird, sondern dass dieser Mutterring in Zusammenschraubrichtung eine erhöhte Ausdehnung besitzt, welche durch Krafteinwirkung zusammengedrückt werden kann. Dazu ist es sinnvoll, den Mutterring entweder in Richtung der Verspannung (welche gleichbedeutend ist mit der Richtung der Zusammendrückung) abgewinkelt oder mäanderförmig ausgestaltet ist. Dann geben sich gegebenenfalls mehrere Vorspannspalte. Jedoch haben weiterhin alle diese Vorspannspalte die Funktion, einen Federweg für die Zusammendrückung oder Verspannung im Sinne der Erfindung bereitzustellen. Selbstverständlich ist dies nur möglich, wenn diese mehreren Vorspannspalte stets in der gleichen Flächenebene liegen. Wie vorher beschrieben, trennt der Vorspannspalt den "eigentlichen" Drehkörper, also die jeweilige Drehverbindungskomponente, vom zugehörigen "integrierten" Mutterring. Der Mutterring gilt deshalb als integriert, weil er nur funktionell von der jeweiligen Drehverbindungskomponente getrennt ist und nicht absolut geometrisch von dieser getrennt ist. Die geometrische Verbindung zwischen Mutterring und der jeweiligen Drehverbindungskomponente wird jeweils durch einen sogenannten Materialsteg gebildet, welche sinngemäß die Brücke zwischen Drehverbindungskomponente und Mutterring bildet, welche aus demselben Material besteht wie Mutterring und Drehverbindungskomponente.

Sind mehrere Vorspannspalte vorhanden, so sind demnach auch mehrere Materialstege vorhanden.

Die Verspannung wird erzeugt durch jeweils mehrere (mindestens zwei) konzentrisch um die Mittelachse einer Befestigungsschraube angeordnete Vorspannschrauben, die gegen die Körperfläche der Drehverbindungskomponente gedrückt werden. Die Verspannkraft rührt aus der kraftschlüssigen Wirkung der Verschraubung der Vorspannschrauben in Ihren Gewindebohrungen, welche gegen die Körperfläche (gedrückt werden.

Es ist im Sinne der Lehre der Erfindung zu betonen, dass eine bandförmige Dichtungsanordnung ebenso Bestandteil der Erfindungsvorrichtung sein kann. Diese Dichtungsanordnung dient der Abdeckung oder dem Schutz des Vorspannspaltes und sowohl aus den Standarddichtungswerkstoffen (NBR, FPM, Viton, ECO, HNBR und ähnlichen bestehen, aber auch aus Verbunddichtungswerkstoffen. Es kommen beispielsweise aber auch Dichtungssysteme in Frage mit eingelegter "Seele" oder eingelegtem oder einlegbarem Spannring, wie beispielsweise aus Glasfaser, Carbon oder Stahl. Dieses Dichtungssystem kann in einer weiteren Erfindungsausgestaltung einteilig oder mehrteilig sein.

Weitere Merkmale, Eigenschaften, Vorteile und Wirkungen auf der Grundlage der Erfindung ergeben sich aus den folgenden Beschreibungen einer bevorzugten Ausführungsform der Erfindung, sowie weiteren vorteilhaften Ausgestaltungen der Erfindung, sowie anhand der Zeichnungen. Diese Figuren werden folgend beschrieben:

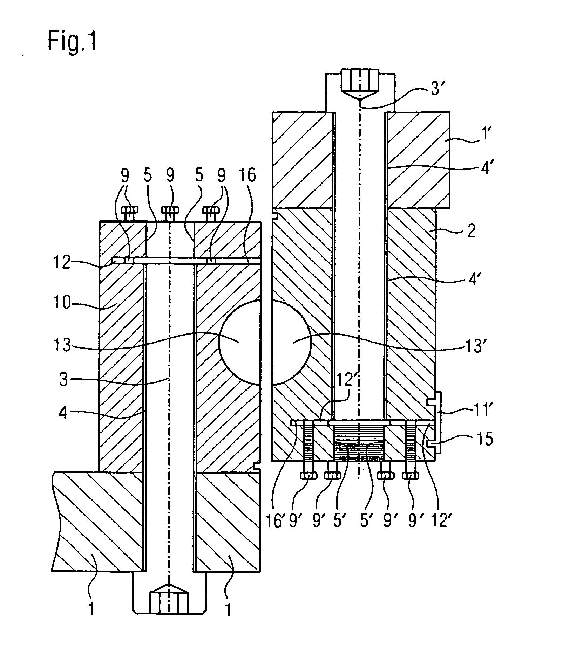

Fig.1 zeigt beispielhaft die Vollschnittdarstellung (Radialschnitt durch eine Drehverbindung mit dem erfindungsgemäßen integrierten Vorspannsystem) mit je einem einfachen Materialsteg und einer einfach vorhandenen "Ringscheibe" uns somit je einem einfach vorhandenen Vorspannspalt pro Drehkörper. Eingezeichnet ist je nur eine Wälzkörperlaufbahn pro Drehkörper.

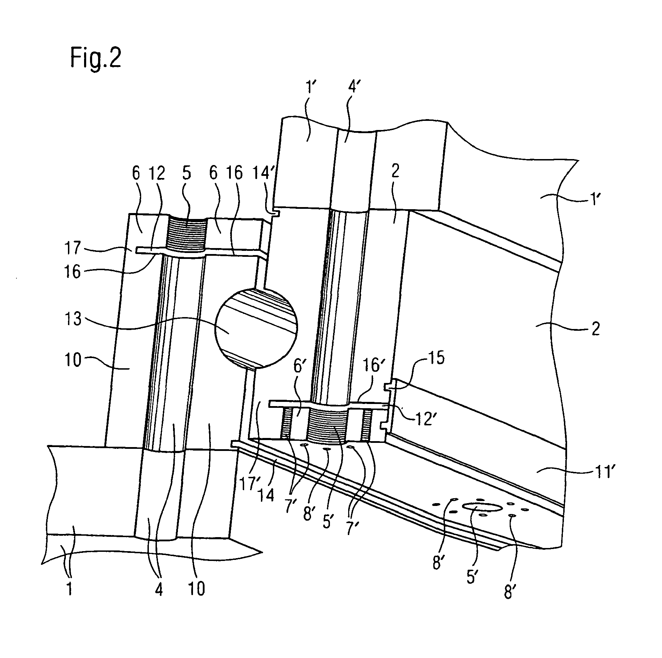

Fig.2 zeigt beispielhaft exakt dieselbe Vollschnittdarstellung (Radialschnitt durch eine Drehverbindung mit dem erfindungsgemäßen integrierten Vorspannsystem) aus Figur Fig.1, jedoch in einer perspektivischen Ansicht von unten rechts.

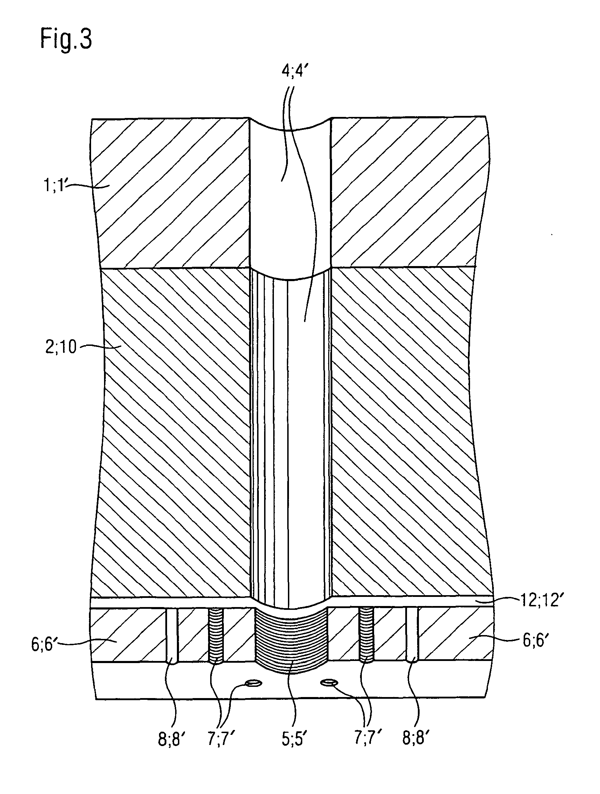

Fig.3 zeigt beispielhaft die Schnittdarstellung einer Drehverbindung mit dem erfindungsgemäßen integrierten Vorspannsystem bezogen auf die beiden vorherigen Figuren Fig.1 und Fig.2, und ebenfalls ohne jegliche Schrauben dargestellt, als Ausschnitt / Detailansicht, in dem lediglich die Bohrungen sowohl der Befestigungsbohrung als auch der Gewindebohrungen (inklusive benachbarter Prüfbohrungen) dargestellt werden.

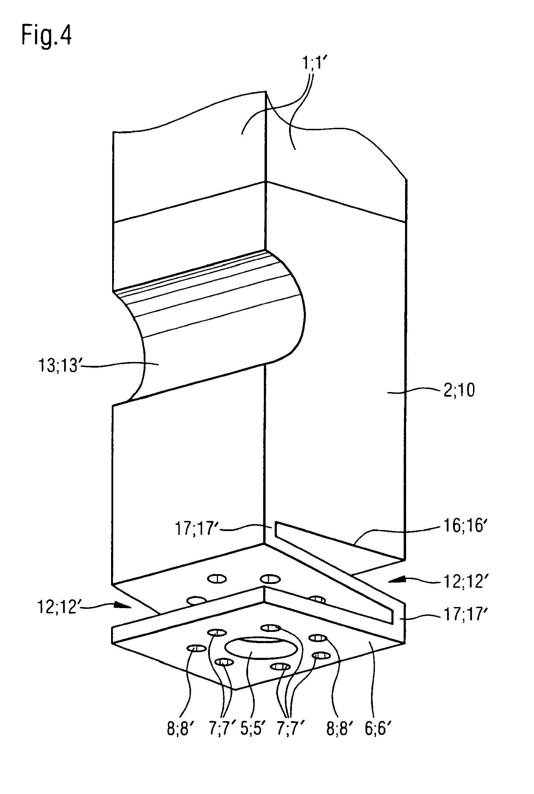

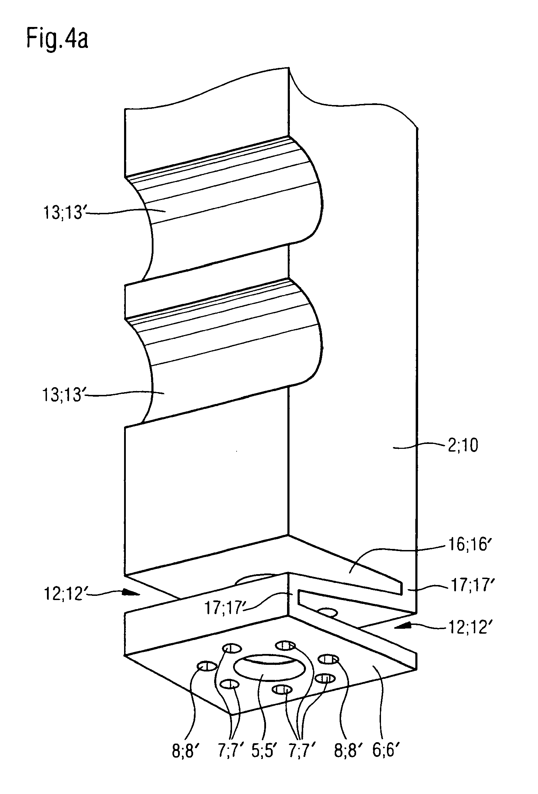

Fig. 4 zeigt beispielhaft die gedanklich ausgeschnittene Darstellung einer Drehverbindung mit dem erfindungsgemäßen integrierten Vorspannsystem mit mehrfach (zweifach) vorhandenem Materialsteg und mit mehrfach (zweifach) abgewinkeiter "Ringscheibe" beziehungsweise Mutterring. Ziel dieser erhöhten Ausdehnung des Mutterrings ist die Erreichung eines höheren Federweges bei Verspannung im Sinne der Erfindung. Dargestellt ist die Perspektive nur einer solchartigen Verschraubung. Angedeutet ist nur eine Wälzkörperlaufbahn.
Fig. 4a zeigt beispielhaft ebenfalls eine gedanklich ausgeschnittene Darstellung einer Drehverbindung mit dem erfindungsgemäßen integrierten Vorspannsystem mit ebenfalls einem mehrfach (zweifach) vorhandenen Materialsteg und mit mehrfach (zweifach) abgewinkeiter "Ringscheibe" beziehungsweise Mutterring. Ziel dieser erhöhten Ausdehnung des Mutterrings ist die Erreichung eines höheren Federweges bei Verspannung im Sinne der Erfindung. Dargestellt ist die Perspektive nur einer solchartigen Verschraubung. Dargestellt ist im Vergleich zur Fig.4 eine um 180 Grad gedrehte Anordnung des integrierten Vorspannsystems. Angedeutet sind zwei Wälzkörperlaufbahnen.

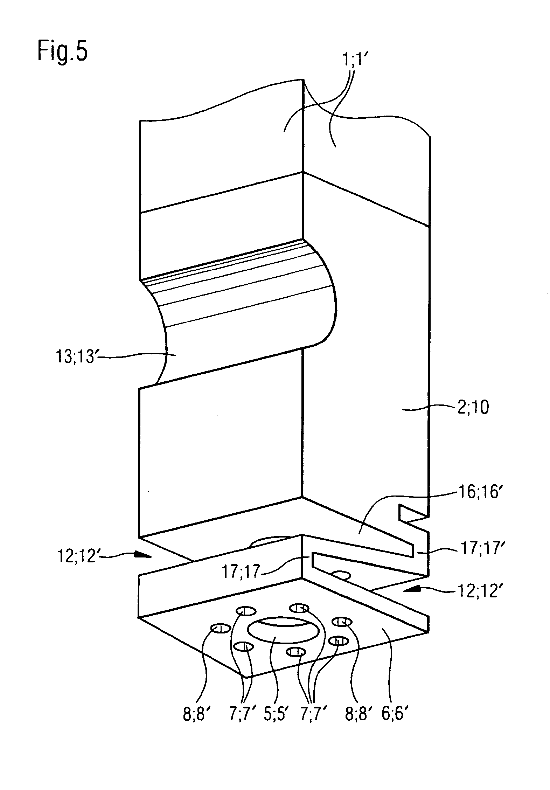

Fig. 5 zeigt, wie auch Fig. 4, beispielhaft die gedanklich ausgeschnittene Darstellung einer Drehverbindung mit dem erfindungsgemäßen integrierten Vorspannsystem mit einem mehrfach vorhandenen Materialsteg und wiederum mehrfach abgewinkelter "Ringscheibe" beziehungsweise Mutterring. Ziel dieser erhöhten Ausdehnung des

Mutterrings ist die Erreichung eines höheren Federweges bei Verspannung im Sinne der Erfindung. Dargestellt ist die Perspektive nur einer solchartigen Verschraubung. Ebenfalls angedeutet ist eine weitere Umlaufnut. Angedeutet ist nur eine Wälzkörperlaufbahn.

Die Zeichnung Fig.1 zeigt die Schnittdarstellung einer Drehverbindung mit integriertem Vorspannsystem, beispielhaft darstellend einen vorgespannten Innenring (IR) (2) und einen vorgespannten Außenring (AU) (10), jeweils sichtbar aufzeigend die Vorspannschrauben (9 ; 9'), die in die Gewinde des jeweiligen integrierten Mutterrings ( 6 ; 6' nur in Fig. 2 als solcher benannt) eingeschraubt sind und an der jeweiligen Drehverbindungskomponente ( 2 ; 10 ) mechanisch kontaktieren um die Drehverbindungskomponente ( 2 ; 10 ) gegenüber dem Mutterring ( 6 ; 6' nur in Fig. 2 als solcher benannt) zu beabstanden, während die jeweilige Befestigungsschraube (3 ; 3') gegenüber der jeweiligen Drehverbindungskomponente ( 2 ; 10 ) vorgespannt wird. Die Befestigungsschraube (3 ; 3' ) befestigt jeweils die Drehverbindungskomponente ( 2 ; 10 ) mit der zugehörigen Anschlusskonstruktion ( 1 ; 1' ). Die Drehverbindungskomponenten ( 2 ; 10 ) sind gegeneinander verdrehbar gelagert durch im Allgemeinen mindestens eine Reihe von Wälzkörpern in entsprechenden Laufbahnen. In Fig.1 dargestellt ist nur eine solche Wälzkörperlaufbahn ( 13 ; 13' ) pro Drehverbindungskomponente. Der jeweilige Vorspannspalt ( 12 ; 12' ) wird in seiner Spaltbreite maßgeblich durch die vorgefertigte Breite während des Einstichdrehens definiert. Im Betrieb jedoch kann sich dieser Vorspannspalt ( 12 ; 12' ) vergrößern oder verringern, je nachdem wie hoch der Betrag der Vorspannung der Vorspannschrauben ( 9 ; 9' ) ist um den Mutterring ( 6 ; 6' ) geeignet von dem eigentlichen Drehkörper ( 2 ; 10 ) zu beabstanden. Die Vorspannschrauben ( 9 ; 9' ) kontaktieren den jeweiligen Drehkörper ( 2 ; 10 ) jeweils an der dem Vorspannspalt gegenüberliegenden Körperfläche ( 16 ; 16' ).

Fig.2 zeigt beispielhaft die Schnittdarstellung einer Drehverbindung mit integriertem Vorspannsystem (ohne alle Schraubenelemente) in perspektivischer Sicht von unten rechts, wobei beispielhaft dadurch alle Bohrungen und Gewinde ( 8 ; 8' ; 7 ; 7' ; 5 ; 5' ) perspektivisch sichtbar werden. Es ist klar auszumachen, dass nicht nur die Gewindebohrungen ( 7 ; 7' ) der Vorspannschrauben ( 9 ; 9' ) konzentrisch um die Bohrungen ( 4 ; 4' ) für die Befestigungsschrauben angeordnet sind, sondern dass es vielmehr hinsichtlich des relativ geringen Durchmessers ähnliche Bohrungen ( 8 ; 8' ) gibt, welche allerdings ohne Gewinde ausgeführt sind welche nicht zur Aufnahme von Vorspannschrauben dienen, sondern rein zu dem Zwecke, um eine Überprüfung der Schraubenspannung durchzuführen. Dieses Konzept wird beispielhaft auch gut in Fig. 3 sichtbar. In Fig. 2 ist darüber hinaus aufgezeigt, wie eine mögliche Banddichtung ( 11' ) angebracht ist, um den jeweiligen Vorspannspalt vor Schmutz und Verunreinigen zu schützen. Eine innen liegende Nut ( 14' ) deutet die Position einer herkömmlichen Spalt- oder Lippendichtung zur Abdichtung des Lagerspaltes an. Hinweis: Diese Spalt- oder Lippendichtung ist nicht erfindungsmaßgeblich.

Durch Fig.1 wird das Verfahren zum Erzeugen einer mechanischen Spannung bereits sehr deutlich dargestellt. Einbringungsort des Vorspannspaltes ( 12 ; 12' ) sind jeweils die gegeneinander verdrehbaren mechanischen Lagerkomponenten ( 2 ; 10 ) einer Drehverbindung, also die Drehkörper ( 2 ; 10 ) , wie beispielsweise Innenring (IR ; 2 ) und / oder Außenring (AU ; 10 ). Es handelt sich beispielsweise um Lagerkomponenten ( 2 ; 10 ) als Teil eines kleinen Wälzlagers oder aber auch eines Großwälzlagers mit Durchmessern von mehr als 0,5 Metern. Die durch die Vorspannschrauben ( 9 ; 9' ) erzeugte mechanische Spannung hat die Richtung und ist geeignet, um einen Vorspannspalt ( 12 ; 12' ) zu verbreitern oder zu verringern. Diese Spannung wird jeweils durch mehrere konzentrisch um die Mittelachse einer Befestigungsschraube ( 3 ; 3' ) angeordnete Vorspannschrauben (9 ; 9') erzeugt, welche mit gewissen Drehmomenten "angezogen" werden. (Hinweis: In Fig. 1 sind sämtliche Schraubenteile dargestellt, die in den weiteren Zeichnungen Fig. 2 und Fig.3 aufgrund erhöhter Verständlichkeit der Darstellung nicht eingezeichnet wurden.)

Es ist aus den Zeichnungen Fig. 1 mit Fig. 2 sichtbar, dass jeweils jede Vorspannschraube ( 9 ; 9' ) in eine konzentrische Ringscheibe ( 6 ; 6' ), insbesondere einen sogenannten Mutterring ( 6 ; 6' ), eingebracht ist und exakt diese Ringsscheibe ( 6 ; 6' ) oder diesen Mutterring ( 6 ; 6' ) gegen die jeweilige Drehverbindungskomponente ( 2 ; 10 ) des Lagers (beziehungsweise der Drehverbindung) mechanisch verspannen. Das charakteristische an der Erfindung ist, dass die umlaufende Ringscheibe ( 6 ; 6' ) oder der jeweilige Mutterring ( 6 ; 6' ) jeweils integraler Bestandteil der zugehörigen Drehverbindungskomponente ( 2 ; 10 ) ist. Diese Ringscheibe ist verbunden mit dem Drehkörper beziehungsweise der jeweiligen Drehverbindungskomponente ( 2 ; 10 ) und kann somit im Betrieb oder während der mechanischen Belastung des Lagers oder der Drehverbindung nicht "ver!oren" werden, obwohl eine absolute körperliche Trennung der Ringscheibe oder des Mutterrings ( 6 ; 6' ) von der jeweiligen Drehverbindungskomponente ( 2 ; 10 ) durch den Vorspannspalt ( 12 ; 12' ) nicht erfolgt. Vielmehr existiert eine jeweils sinngemäße Trennung dadurch, dass der Mutterring beziehungsweise die Ringscheibe, auch Ringmutter genannt, durch einen mittels tiefen und schlank gestalteten umlaufenden Einstich ( 12 ; 12' ) von der jeweiligen Drehverbindungskomponente ( 2 ; 10 ), funktional getrennt wird.

Es ist aus den Zeichnungen Fig. 1 und Fig. 2 ebenfalls ersichtlich, dass die jeweilige Ringscheibe oder der jeweilige Mutterring ( 6 ; 6' ) mit der jeweiligen Drehverbindungskomponente ( 2 ; 10 ) durch einen Materialsteg ( 17 ; 17') verbunden ist. Dieser Materialsteg ist beispielsweise schlichtweg der Anteil am Vollmaterial des Rings (Innenrings oder Außenrings), welcher beim Drehen des Einstichs nicht spanend entfernt wurde. Es wäre zukünftig ggfs. ebenso denkbar, in einer weiteren Ausgestaltung der Erfindung, dass durch andere Fertigungsverfahren als spanende Bearbeitung ein solcher Vorspannspalt gefertigt wird.

Letztlich ist in Fig. 1 mit Fig. 2 ebenfalls gut beispielhaft sichtbar, dass das gegenseitige Verspannen der Ringsscheibe oder des Mutterrings 6 ; 6' ) gegen die jeweilige Drehverbindungskomponente ( 2 ; 10 ) dadurch erfolgt, dass die Vorspannschrauben (9 ; 9') an der dem Vorspannspalt ( 12 ; 12' ) gegenüberliegenden Körperfläche ( 16 ; 16' ) kontaktieren und durch das Anziehen der Vorspannschrauben ( 9 ; 9' ) dagegen gedrückt werden. Die Vorspannschrauben (9 ; 9') werden erfindungsgemäß in der Ringscheibe ( 6; 6' ) jeweils durch Bohrungen mit Gewinde ( 7 ; 7' ) gehalten, wie in Fig. 2 unten rechts gut zum Vorschein kommt. Durch das Anziehen der Vorspannschrauben werden diese nicht nur gehalten, sondern gleichzeitig mechanisch "festgekeilt". Das Ergebnis ist eine verspannte, beziehungsweise vorgespannte Schraubenverbindung, welche Anschlusskonstruktion ( 1; 1' ) jeweils mit der Drehverbindung ( 2 ; 10 ) fest, aber wieder lösbar, verschraubt.

Wie aus Fig. 1 sowie Fig. 2 und Fig.3 erkannt werden kann, werden beispielsweise nicht nur die Vorspannschrauben in Bohrungen mit Gewinde eingedreht, sondern auch die jeweiligen Befestigungsschrauben ( 3 ; 3' ), welche dazu dienen, die Anschlusskonstruktion ( 1;1' ) mit dem jeweiligen Lager lösbar zu verbinden. Es ist dabei beispielsweise so, dass jeweils mindestens eine Befestigungsschraube eine Anschlusskonstruktion ( 1 ; 1' ) mit der Drehverbindungskomponente ( 2 ; 10 ) verschraubt und dass Befestigungsgewinde ( 5 ; 5' ) der Verschraubung der Befestigungsschraube nur im Mutterring ( 6 ; 6' ) eingebracht ist. Insgesamt gesehen wird eine Drehverbindung mit mehreren solcher Befestigungsschrauben an der jeweiligen Anschlusskonstruktion ( 1 ; 1' ) verschraubt - je nach Notwendigkeit und Berechnung. Das erfindungsgemäße Verfahren ist indes dadurch charakterisiert, dass die aus den Vorspannschrauben ( 9 ; 9' ) resultierende mechanische Verschiebung des Mutterrings ( 6 ; 6' ) in entgegen gesetzter Richtung wirken kann wie die Einschraubrichtung der Befestigungsschraube in die Drehverbindungskomponente ( 2 ; 10 ) ist, oder aber auch in gleiche Richtung wirken kann. Das erfindungsgemäße Verfahren, als auch die Vorrichtung ist ferner dadurch charakterisiert, dass der Vorspannspalt durch die genannte umlaufende ( 11;11' ) Dichtungsvorrichtung abgedichtet und staubgeschützt wird, wobei diese Dichtungsvorrichtung bandförmig ausgeführt sein kann und durch mindestens eine Fixiernut (15) in der jeweiligen Drehverbindungskomponente ( 2 ; 10 ) beziehungsweise gleichzeitig auch dem zugehörigen Mutterring ( 6 ; 6' ) befestigt und gehalten wird.

Fig. 1 mit Fig. 3 offenbaren jedoch beispielhaft nicht nur das Verfahren, aber auch die entsprechende und zugehörige Vorrichtung zum jeweiligen mechanischen Verspannen mindestens einer Verschraubung in jeweils einem der gegeneinander verdrehbaren mechanischen Lagerkomponenten ( 2 ; 10 ) einer Drehverbindung. Wie bereits beispielhaft erklärt ist die Verspannvorrichtung geeignet um einen als "Vorspannspatt" ( 12 ; 12' ) bezeichneten Einstich zu verbreitern oder zu verkleinern. Die Verspannung wird erzeugt durch jeweils mehrere konzentrisch um die Mittelachse einer Befestigungsschraube ( 3 ; 3' ) angeordnete Vorspannschrauben (9 ; 9'). Die Beschreibung sämtlicher Komponenten folgt exakt analog zu dem oben beschriebenen Verfahren.

Fig. 4, Fig. 4a und Fig. 5 offenbaren beispielhaft das Verfahren beziehungsweise die zugehörige Vorrichtung zum jeweiligen mechanischen Verspannen von Verschraubung(en) in jeweils einem der gegeneinander verdrehbaren mechanischen Lagerkomponenten ( 2 ; 10 ) einer Drehverbindung, jedoch bei Verwendung eines Mutterringes ( 6; 6' ), welcher eine - im Gegensatz zu den vorherigen Beispielen - erhöhte Ausdehnung in der Verspannungsrichtung besitzt. Die Verspannungsrichtung ist in diesem Beispiel, wie auch in den vorherigen beispielhaften Figuren, im Wesentlichen gleich der Einschraubrichtung. Dargestellt ist in den Figuren ein abgewinkelter beziehungsweise mäanderförmiger Mutterring (6 ; 6' ), welcher demnach über mehrere Vorspannspalte ( 12 ; 12' ) verfügt. Dementsprechend sind dort auch mehrere Materialstege ( 17; 17' ) vorhanden.

In den Zeichnungen Fig. 4, Fig. 4a und Fig. 5 ist es so wie in Fig. 1 mit Fig. 3 dargestellt, dass auch hier die Bohrungen ( 7; 7' ) für Vorspannschrauben ( 9 ; 9' ) vorhanden sind. Nicht eingezeichnet sind die jeweiligen Vorspannschrauben ( 9 ; 9' ). Bei Verwendung der Vorspannschrauben ( 9 ; 9' ) im Sinne der Erfindung in den Zeichnungen Fig. 4, Fig. 4a und Fig. 5 , so würden diese den jeweiligen Drehkörper ( 2 ; 10 ) jeweils an der dem obersten Vorspannspalt gegenüberliegenden Körperfläche ( 16 ; 16' ) kontaktieren. Dadurch würde eine in den Mutterring ( 6;6' ) eingesetzte Befestigungsschraube ( 3; 3') gegenüber der Drehverbindungskomponente ( 2 ; 10 ) verspannt werden.

Wie bereits oben beispielhaft erklärt ist im Allgemeinen die erfindungsgemäße Verspannvorrichtung dazu geeignet um mindestens einen als Vorspannspalt ( 12 ; 12' ) bezeichneten Einstich zu verbreitern oder zu verkleinern. Die Verspannung wird erzeugt durch jeweils mehrere (mindestens zwei) konzentrisch um die Mittelachse einer Befestigungsschraube ( 3 ; 3' ) angeordnete Vorspannschrauben (9 ; 9'), welche gegen die Körperfläche ( 16 ; 16' ) der Drehverbindungskomponente ( 2 ; 10 ) gedrückt werden. Die Verspannkraft rührt aus der kraftschlüssigen Wirkung der Verschraubung der Vorspannschrauben (9 ; 9') in Ihren Gewindebohrungen ( 7; 7' ), welche gegen die Körperfläche ( 16 ; 16' ) gedrückt werden.

### Bezugszeichenliste für anhängende Zeichnungen:

- (1) (1'): Anschlusskonstruktion
- (2) (IR): Lagerkomponente ; Erster Drehkörper ; Drehverbindungskomponente z.B.: Innenring
- (3) (3'): Befestigungsschraube inkl. deren Mittelachse
- (4) (4'): Befestigungsbohrung (Durchgangsbohrung)
- (5) (5'): Befestigungsgewinde (Gewindebohrung)
- (6) (6'): konzentrische Ringscheibe ; "Mutterring"
- (7) (7'): Gewindebohrung für Vorspannschrauben
- (8) (8'): Prüf-/ Durchgangsbohrung (zur Spannungsüberprüfung)
- (9) (9'): Vorspannschrauben
- (10) (AU): Lagerkomponente ; Zweiter Drehkörper ; Drehverbindungskomponente z.B.: Außenring
- (11) (11'): Dichtungsvorrichtung (beispielsweise bandförmig)
- (12) (12'): Vorspannspalt
- (13) (13'): Wälzkörperlaufbahn
- (14) (14'): Umlaufnut (zur Aufnahme der Dichtungsanordnung)
- (15): Fixiernut für die Dichtungsvorrichtung
- (16) (16'): Körperfläche der Lagerkomponente
- (17) (17'): Materialsteg

## Patentansprüche

1. Verfahren zum Erzeugen einer mechanischen Spannung in jeweils mindestens einem der gegeneinander verdrehbaren mechanischen Lagerkomponenten ( 2 ; 10 ) einer Drehverbindung, insbesondere eines Wälzlagers oder Großwälzlagers, wobei diese mechanische Spannung die Richtung hat, mindestens einen Vorspannspalt ( 12 ; 12' ) zu verbreitern oder zu verringern und erzeugt wird durch mehrere konzentrisch um die Mittelachse einer Befestigungsschraube ( 3 ; 3' ) angeordnete Vorspannschrauben (9 ; 9'),
**dadurch gekennzeichnet dass**,
die Vorspannschrauben ( 9 ; 9' ) in eine konzentrisch umlaufende Ringscheibe (6 ; 6' ), insbesondere in einen sogenannten Mutterring, eingebracht sind und diese Ringscheibe ( 6 ; 6' ) gegen die jeweilige Lagerkomponente ( 2 ; 10 ) mechanisch verspannen, wobei diese umlaufende Ringscheibe ( 6 ; 6' ) jeweils Teil der zugehörigen Lagerkomponente ( 2 ; 10 ) ist.

2. Verfahren nach Anspruch 1 **gekennzeichnet dadurch, dass**
eine geometrische Trennung der Ringscheibe oder des Mutterrings ( 6 ; 6' ) von der jeweiligen Drehverbindungskomponente ( 2 ; 10 ) durch mindestens einen nicht durchgängigen Vorspannspalt ( 12 ; 12' ) erfolgt.

3. Verfahren nach Anspruch 1 **gekennzeichnet dadurch, dass**
die Ringscheibe oder der Mutterring ( 6 ; 6' ) mit der jeweiligen Drehverbindungskomponente ( 2 ; 10 ) durch einen Materialsteg ( 17 ; 17') verbunden ist.

4. Verfahren nach Anspruch 1 **gekennzeichnet dadurch, dass**
das gegenseitige Verspannen der Ringsscheibe oder des Mutterrings ( 6 ; 6' ) gegen die jeweilige Drehverbindungskomponente ( 2 ; 10 ) dadurch erfolgt, dass die Vorspannschrauben (9 ; 9') an der dem mindestens einen Vorspannspalt ( 12 ; 12' ) gegenüberliegenden Körperfläche ( 16 ; 16' ) kontaktieren und dagegen gedrückt werden, wobei die Vorspannschrauben in der Ringscheibe ( 6; 6' ) jeweils durch Bohrungen mit Gewinde ( 7 ; 7' ) gehalten werden.

5. Verfahren nach Anspruch 1 **gekennzeichnet dadurch, dass**
die jeweilige Befestigungsschraube jeweils mittels Gewinde ( 5 ; 5' ) in entsprechenden Bohrungen ( 4 ; 4' ) fixiert wird.

6. Verfahren nach Anspruch 1 **gekennzeichnet dadurch, dass**
jeweils mindestens eine Befestigungsschraube eine Anschlusskonstruktion ( 1 ; 1' ) mit der jeweiligen Drehverbindungskomponente ( 2 ; 10 ) verschraubt.

7. Verfahren nach Anspruch 1 **gekennzeichnet dadurch, dass**
jeweils mindestens eine Befestigungsschraube eine Anschlusskonstruktion ( 1 ; 1' ) mit der Drehverbindungskomponente ( 2 ; 10 ) verschraubt und dass Befestigungsgewinde ( 5 ; 5' ) der Verschraubung der Befestigungsschraube nur im Mutterring ( 6 ; 6' ) eingebracht ist.

8. Verfahren nach Anspruch 1 **gekennzeichnet dadurch, dass**
die aus den Vorspannschrauben ( 9 ; 9' ) resultierende mechanische Verschiebung des Mutterrings ( 6 ; 6' ) in entgegengesetzter Richtung wirken kann wie die Einschraubrichtung der Befestigungsschraube in die Drehverbindungskomponente ( 2 ; 10 ) ist, oder aber in gleicher Richtung wirken kann.

9. Verfahren nach Anspruch 1 **gekennzeichnet dadurch, dass**
der Vorspannspalt durch eine umlaufende Dichtungsvorrichtung abgedichtet und staubgeschützt wird, wobei diese Dichtungsvorrichtung bandförmig ausgeführt sein kann und durch mindestens eine Fixiernut (15) in der jeweiligen Drehverbindungskomponente ( 2 ; 10 ) beziehungsweise dem zugehörigen Mutterring ( 6 ; 6' ) befestigt und gehalten wird, wobei diese Dichtungsvorrichtung sowohl aus den Standarddichtungswerkstoffen (NBR, FPM, Viton, ECO, HNBR und Ähnlichem) bestehen kann, aber auch aus Verbunddichtungswerkstoffen.

10. Vorrichtung zum mechanischen Verspannen mindestens einer Verschraubung in jeweils einem der gegeneinander verdrehbaren mechanischen Lagerkomponenten ( 2 ; 10 ) einer Drehverbindung, insbesondere eines Wälzlagers oder Großwälzlagers, wobei die Verspannvorrichtung geeignet ist mindestens einen Vorspannspalt ( 12 ; 12' ) zu verbreitern oder zu verkleinern und wobei die Verspannung erzeugt wird durch jeweils mehrere konzentrisch um die Mittelachse einer Befestigungsschraube ( 3 ; 3' ) angeordnete Vorspannschrauben (9 ; 9'),
**dadurch gekennzeichnet dass**, die Vorspannschrauben ( 9 ; 9' ) in eine konzentrisch umlaufende Ringscheibe (6 ; 6' ), insbesondere in einen sogenannten Mutterring, eingebracht sind und diese Ringscheibe ( 6 ; 6' ) gegen die jeweilige Lagerkomponente ( 2 ; 10 ) mechanisch verspannen, und wobei diese umlaufende Ringscheibe ( 6 ; 6' ) jeweils Teil der zugehörigen Lagerkomponente ( 2 ; 10 ) ist.

11. Vorrichtung nach Anspruch 10 **gekennzeichnet dadurch, dass**
eine geometrische Trennung der Ringscheibe oder des Mutterrings ( 6 ; 6' ) von der jeweiligen Drehverbindungskomponente ( 2 ; 10 ) durch mindestens einen nicht durchgängigen Vorspannspalt ( 12 ; 12' ) erfolgt.

12. Vorrichtung nach Anspruch 10 **gekennzeichnet dadurch, dass**
die Ringscheibe oder der Mutterring ( 6 ; 6' ) mit der jeweiligen Drehverbindungskomponente ( 2 ; 10 ) mit einen Materialsteg ( 17 ; 17') verbunden ist.

13. Vorrichtung nach Anspruch 10 **gekennzeichnet dadurch, dass**
das gegenseitige Verspannen der Ringsscheibe oder des Mutterrings ( 6 ; 6' ) gegen die jeweilige Drehverbindungskomponente ( 2 ; 10 ) dadurch erfolgt, dass die Vorspannschrauben (9 ; 9') an der dem mindestens einen Vorspannspalt ( 12 ; 12' ) gegenüberliegenden Körperfläche ( 16 ; 16' ) kontaktieren oder dagegen gedrückt werden, wobei die Vorspannschrauben in der Ringscheibe ( 6; 6' ) jeweils durch Bohrungen mit Gewinde ( 7 ; 7' ) gehalten werden und die Vorspannung über spezielle Prüf- und Durchgangsbohrungen ( 8 ; 8' ) kontrolliert werden kann.

14. Vorrichtung nach Anspruch 10 **gekennzeichnet dadurch, dass**
die jeweilige Befestigungsschraube ( 3; 3' )jeweils mittels Gewinde ( 5 ; 5' ) in entsprechenden Bohrungen ( 4 ; 4' ) fixiert wird.

15. Vorrichtung nach Anspruch 10 **gekennzeichnet dadurch, dass**
jeweils mindestens eine Befestigungsschraube eine Anschlusskonstruktion ( 1 ; 1' ) mit der Drehverbindungskomponente ( 2 ; 10 ) verschraubt und dass Befestigungsgewinde ( 5 ; 5' ) der Verschraubung der Befestigungsschraube nur im Mutterring ( 6 ; 6' ) eingebracht ist.

## Claims

1. Method for generating a mechanical stress in each case at least in one of the against each other rotatable mechanical bearing components (2; 10) of a rotary joint, particularly of an antifriction bearing or large-diameter antifriction slewing ring, where such mechanical stress has the direction to increase or to decrease at least one pre-tensioning gap (12; 12') and in each case is generated by several pre-tensioning bolts (9; 9') concentrically arranged around the centerline of a fastening bolt (3; 3'),
**characterized by** the fact that
the pre-tensioning bolts (9; 9') incorporate into a concentric rotating ring disk (6; 6'), particularly into a so-called nut ring and mechanically tension up that ring disk (6; 6') against the respective bearing component (2; 10) whereas that rotating ring disk (6; 6') always is part of the corresponding bearing component (2; 10).

2. Method according claim 1, **characterized by** the fact that
a geometrical separation of the ring disk or of the nut ring (6; 6') from the respective rotary joint component (2; 10) is achieved by at least one non-continuous pre-tensioning gap (12; 12').

3. Method according claim 1, **characterized by** the fact that
the ring disk or the nut ring (6; 6') is connected to the respective rotary joint component (2; 10) by a crosspiece of material (17; 17').

4. Method according claim 1, **characterized by** the fact that
the interacting tensioning of the ring disk or of the nut ring (6; 6') against the respective rotary joint component (2; 10) is effected by the fact that the pre-tensioning bolts (9; 9') contact at and are pressed against the body surface /16; 16') opposite to the at least one pre-tensioning gap (12; 12') whereby the pre-tensioning bolts each are retained in the ring disk (6; 6') by threaded drill holes (7; 7').

5. Method according claim 1, **characterized by** the fact that
the respective fastening bolt is fixed in each case by means of a thread (5; 5') in the corresponding drill holes (4; 4').

6. Method according claim 1, **characterized by** the fact that
in each case at least one fastening bolt is bolting an adjoining structural component (1; 1') to the respective rotary joint component (2; 10).

7. Method according claim 1, **characterized by** the fact that
in each case at least one fastening bolt is bolting an adjoining structural component (1; 1') to the rotary joint component (2; 10) and that the fastening thread (5; 5') of the screw joint of the fastening bolt is incorporated in the nut ring (6; 6') only.

8. Method according claim 1, **characterized by** the fact that
the mechanical displacement of the nut ring (6; 6') resulting from the pre-tensioning bolts (9; 9') can act in opposite direction to the screw-in direction of the fastening bolt into the rotary joint component (2; 10), or else can act in the same direction.

9. Method according claim 1, **characterized by** the fact that
the pre-tensioning gap is sealed and dust-protected by a rotating sealing device where such sealing device may be executed ribbon-like and is attached to and retained in the respective rotary joint component (2; 10) respectively in the corresponding nut ring (6; 6') by at least one fixing groove (15), where such sealing device may as well be made of the standard materials (NBR, FPM, Viton, ECO, HNBR, or similar) as also of composite gasket materials.

10. Equipment for mechanically tensioning up at least one screw joint in each one of the against each other rotatable mechanical bearing components (2; 10) of a rotary joint, particularly of an antifriction bearing or large-diameter antifriction slewing ring, where such tensioning equipment is applicable to increase or to decrease at least one pre-tensioning gap (12; 12') and is generated in each case by several pre-tensioning bolts (9; 9') concentrically arranged around the centerline of a fastening bolt (3; 3'), **characterized by** the fact that the pre-tensioning bolts (9; 9') are incorporated in a concentric rotating ring disk (6; 6'), particularly into a so-called nut ring, and are mechanically tensioning up such ring disk (6; 6') against the corresponding bearing component (2; 10), and where such rotating ring disk (6; 6') is in each case part of the corresponding bearing component (2; 10).

11. Equipment according to claim 10, **characterized by** the fact that
a geometrical separation of the ring disk or of the nut ring (6; 6') from the respective rotary joint component (2; 10) is achieved by at least one non-continuous pre-tensioning gap (12; 12').

12. Equipment according to claim 10, **characterized by** the fact that
the ring disk or the nut ring (6; 6') is connected to the respective rotary joint component (2; 10) by a crosspiece of material (17; 17').

13. Equipment according to claim 10, **characterized by** the fact that
the interacting tensioning of the ring disk or of the nut ring (6; 6') against the respective rotary joint component (2; 10) is effected by the fact that the pre-tensioning bolts (9; 9') contact at and are pressed against the body surface /16; 16') opposite to the at least one pre-tensioning gap (12; 12') whereby the pre-tensioning bolts each are retained in the ring disk (6; 6') by threaded drill holes (7; 7') and the prestress can be checked via special checking and through-holes (8; 8').

14. Equipment according to claim 10, **characterized by** the fact that
the respective fastening bolt (3; 3') is fixed in each case by means of a thread (5; 5') in the corresponding drill holes (4; 4').

15. Equipment according to claim 10, **characterized by** the fact that
in each case at least one fastening bolt is bolting an adjoining structural component (1; 1') to the rotary joint component (2; 10) and that the fastening thread (5; 5') of the screw joint of the fastening bolt is incorporated in the nut ring (6; 6') only.

## Revendications

1. Procédé de production d'un serrage mécanique dans respectivement au moins l'un des éléments de palier (2 ; 10) mécaniques, pouvant tourner en opposition, d'un raccord tournant, en particulier d'un palier à roulement ou d'une couronne géante d'orientation, où ce serrage mécanique est destiné à élargir ou à réduire au moins une fente de précontrainte (12 ; 12') et qui est généré par plusieurs vis de précontrainte (9 ; 9') disposées concentriquement autour de l'axe médian d'une vis de fixation (3 ; 3'),
**caractérisé en ce que**
les vis de précontrainte (9 ; 9') sont introduites dans un disque annulaire (6 ; 6') concentriquement périphérique, en particulier dans un anneau d'écrou et serrent mécaniquement ce disque annulaire (6 ; 6') contre l'élément de palier (2 ; 10) respectif ; ce disque annulaire (6 ; 6') périphérique étant respectivement une pièce de l'élément de palier correspondant (2 ; 10).

2. Procédé selon la revendication 1, **caractérisé en ce qu'**une séparation géométrique du disque annulaire ou de l'anneau d'écrou (6 ; 6') de l'élément de raccord tournant respectif (2 ; 10) s'effectue par au moins une fente de précontrainte non continue (12 ; 12').

3. Procédé selon la revendication 1, **caractérisé en ce que** le disque annulaire ou l'anneau d'écrou (6 ; 6') est relié à l'élément de raccord tournant respectif (2 ; 10) par une nervure de matériau (17 ; 17').

4. Procédé selon la revendication 1, **caractérisé en ce que** le serrage mutuel du disque annulaire ou de l'anneau d'écrou (6 ; 6') par rapport à l'élément de raccord tournant respectif (2 ; 10) s'effectue de façon à ce que les vis de précontrainte (9 ; 9') soient en contact au niveau de la surface du corps (16 ; 16') opposée à la ou au moins une fente de précontrainte (12 ; 12') et appliquées par pression ; les vis de précontrainte étant maintenues dans le disque annulaire (6 ; 6') respectivement par des trous filetés (7 ; 7').

5. Procédé selon la revendication 1, **caractérisé en ce que** la vis de fixation respective est fixée respectivement au moyen d'un filetage (5 ; 5') dans des trous correspondants (4 ; 4').

6. Procédé selon la revendication 1, **caractérisé en ce que** respectivement au moins une vis de fixation visse une construction de raccordement (1 ; 1') à l'élément de raccord tournant respectif (2 ; 10).

7. Procédé selon la revendication 1, **caractérisé en ce que** respectivement une vis de fixation visse une construction de raccordement (1 ; 1') à l'élément de raccord tournant (2 ; 10) et **en ce que** le filetage de fixation (5 ; 5') du boulonnage de la vis de fixation est introduit uniquement dans l'anneau d'écrou (6 ; 6').

8. Procédé selon la revendication 1, **caractérisé en ce que** le déplacement mécanique de l'anneau d'écrou (6 ; 6') résultant des vis de précontrainte (9 ; 9') peut agir en sens opposé au sens de vissage de la vis de fixation dans l'élément de raccord tournant (2 ; 10), ou bien également agir dans le même sens.

9. Procédé selon la revendication 1, **caractérisé en ce que** la fente de précontrainte est rendue étanche et protégée contre les poussières par un dispositif d'étanchéité périphérique, où ce dispositif d'étanchéité peut être réalisé sous forme de bande et est fixé et maintenu par au moins une rainure de fixation (15) dans l'élément de raccord tournant (2 ; 10) ou dans l'anneau d'écrou (6 ; 6') correspondant ; ce dispositif d'étanchéité pouvant être aussi bien en matériaux d'étanchéité standard (NBR, FPM, Viton, ECOP, HNBR et similaires) qu'en matériaux d'étanchéité composites.

10. Procédé pour le serrage mécanique d'au moins un boulonnage dans respectivement l'un des éléments de palier (2 ; 10) mécaniques, pouvant tourner en opposition, d'un raccord tournant, en particulier d'un palier à roulement ou d'une couronne géante d'orientation, où le dispositif de serrage est approprié pour élargir ou réduire au moins une fente de précontrainte (12 ; 12') et où la contrainte est générée par respectivement plusieurs vis de précontrainte (9 ; 9') disposées concentriquement autour de l'axe médian d'une vis de fixation (3 ; 3'),
**caractérisé en ce que** les vis de précontrainte (9 ; 9') sont introduites dans un disque annulaire (6 ; 6') concentriquement périphérique, en particulier dans anneau d'écrou et serrent mécaniquement ce disque annulaire (6 ; 6') contre l'élément de palier (2 ; 10) respectif, et où ce disque annulaire (6 ; 6') périphérique est respectivement une pièce de l'élément de palier correspondant (2 ; 10).

11. Procédé selon la revendication 10, **caractérisé en ce qu'**une séparation géométrique du disque annulaire ou de l'anneau d'écrou (6 ; 6') de l'élément de raccord tournant respectif (2 ; 10) s'effectue par au moins une fente de précontrainte non continue (12 ; 12').

12. Procédé selon la revendication 10, **caractérisé en ce que** le disque annulaire ou l'anneau d'écrou (6 ; 6') est relié à l'élément de raccord tournant respectif (2 ; 10) par une nervure de matériau (17 ; 17').

13. Procédé selon la revendication 10, **caractérisé en ce que** le serrage mutuel du disque annulaire ou de l'anneau d'écrou (6 ; 6') par rapport à l'élément de raccord tournant respectif (2 ; 10) s'effectue de façon à ce que les vis de précontrainte (9 ; 9') soient en contact au niveau de la surface du corps (16 ; 16') opposée à la ou au moins à une fente de précontrainte (12 ; 12') ou appliquées par pression, où les vis de précontrainte sont maintenues dans le disque annulaire (6 ; 6') respectivement par des trous filetés (7 ; 7') et la précontrainte peut être contrôlée par le biais des trous de contrôle et des trous débouchant spéciaux (8 ; 8').

14. Procédé selon la revendication 10, **caractérisé en ce que** la vis de fixation (3 ; 3') respective est fixée respectivement au moyen d'un filetage (5 ; 5') dans des trous correspondants (4 ; 4').

15. Procédé selon la revendication 10, **caractérisé en ce que** respectivement au moins une vis de fixation visse une construction de raccordement (1 ; 1') à l'élément de raccord tournant (2 ; 10) et **en ce que** le filetage de fixation (5 ; 5') du boulonnage de la vis de fixation est introduit uniquement dans l'anneau d'écrou (6 ; 6').
